# EUROPÄISCHE PATENTSCHRIFT

(11) **EP 1 080 619 B1**
(45) Veröffentlichungstag und Bekanntmachung des Hinweises auf die Patenterteilung: **21.10.2009**
(21) Anmeldenummer: 00118654.3
(22) Anmeldetag: 29.08.2000
(51) Int. Cl.: A01B 51/02, F15B 21/04, F16H 61/40

(54) **Selbstfahrende landwirtschaftliche Arbeitsmaschine**
Automobile agricultural working vehicle
Véhicule automobile pour travail agricole

(30) Priorität: 02.09.1999 DE 19941841
(43) Veröffentlichungstag der Anmeldung: 07.03.2001
(73) Patentinhaber: CLAAS Selbstfahrende Erntemaschinen GmbH, 33428 Harsewinkel (DE)
(72) Erfinder: Dückinghaus, Heinrich, 33649 Bielefeld (DE)

(56) Entgegenhaltungen:
- EP-A- 0 104 556
- GB-A- 406 233
- GB-A- 1 396 778
- US-A- 3 401 605

## Beschreibung

Die Erfindung betrifft eine selbstfahrende Arbeitsmaschine mit einem Verbrennungsmotor und mit hydrostatischen Antrieben mit mindestens einer von dem Verbrennungsmotor angetriebenen Hydraulikpumpe, die die Hydraulikmotoren und/oder Hydraulikzylinder der Antriebe mit aus einem Tank angesaugten Hydrauliköl bedarfsweise speist und die zur Erzeugung eines umlaufenden Ölstromes eingesetzt ist, in den mindestens ein Verbraucher eingeschaltet ist, wobei zwecks Kühlung des im Arbeitskreis umlaufenden Hydrauliköls ein Teilstrom der in den Öltank zurückzuführenden Gesamtölmenge einen Ölkühler durchströmt.

Bei aus der Praxis bekannten landwirtschaftlichen Erntemaschinen (siehe z.B. das Dokument GB1396778) wird ein gleichbleibender Teil der Gesamtmenge des umlaufenden und zu kühlenden Hydrauliköls durch einen Kühler geführt, bevor es in den Öltank gelangt und sich dort mit dem direkt in den Tank zurückfließenden Öl vermischt. Der Kühler und die durch diesen hindurchströmende Ölmenge müssen dabei so aufeinanderabgestimmt sein, daß auch bei Arbeitsbeginn - also bei kaltem Öl und dem dadurch bedingten hohen Strömungswiderstand in den Leitungen - der maximal zulässige Druck im Ölkühler nicht überschritten wird, um einerseits den Ölkühler selbst, andererseits aber auch die Wellendichtringe im Hydromotor und in der Hydropumpe vor Zerstörung zu schützen. Dies bedeutet aber, daß der Ölkühler bei heißem Öl und folglich geringerem Strömungswiderstand in den Leitungen unwirtschaftlich arbeitet.

Der Erfindung liegt daher die Aufgabe zugrunde, den Wirkungsgrad des Kühlers durch Erhöhung der zu kühlenden Ölmenge zu verbessern, ohne sein Fassungsvermögen zu erhöhen, und ohne die zulässigen Drücke im System zu überschreiten.

Diese Aufgabe wird bei einer selbstfahrenden Arbeitsmaschine der eingangs näher bezeichneten Art dadurch gelöst, daß der umlaufende Ölstrom (B) vor seiner Rückführung in den Öltank einen Ölkühler durchläuft und daß in den umlaufenden Ölstrom (B) vor seinem Einlauf in den Ölkühler eine Einrichtung eingebaut ist, die als Venturidüse ausgeführt ist, und die in Abhängigkeit von der Temperatur des umlaufenden Ölstromes einen Teilstrom aus dem Ölstrom (A) abzweigt.

Nach einem wesentlichen Merkmal der Erfindung wird dies dadurch erreicht, daß der umlaufende Ölstrom über eine Leitung in den Ölkühler geführt ist, in die eine Venturidüse eingebaut ist, deren Sauganschluß mit der Leitung in Verbindung steht, über die der Ölstrom für die hydrostatischen Antriebe in den Öltank zurückgeführt ist.

Durch diese vorliegende Erfindung wird erreicht, daß aus dem Ölstrom für die hydrostatischen Antriebe vor seiner Rückführung in den Öltank durch die Venturidüse ein Teilstrom abgesaugt wird, dessen Größe unmittelbar abhängig ist von der Temperatur des die Venturidüse 12 durchlaufenden Ölflusses. Der maximal zulässige Druck im gesamten System wird dabei nicht erhöht.

Im folgenden soll die Erfindung anhand einer einzigen schematischen Darstellung näher erläutert werden:

In der im Ausführungsbeispiel dargestellten Arbeitsmaschine finden sich 2 Hydraulikkreisläufe, in denen sich Hydraulikflüssigkeit erwärmt und gekühlt werden muß. Durch eine geschickte Kopplung der beiden Kreisläufe gelingt es, den umlaufenden Ölstrom eines Hydraulikkreislaufes zu nutzen, um auch aus dem anderen Hydraulikkreislauf Hydraulikflüssigkeit abzupumpen und zum Ölkühler zu transportieren.

Mit 1 ist ein Hydromotor für den Fahrantrieb eines Mähdreschers bezeichnet, der über zwei Leitungen 2 und 3 mit einer Regulierungsflüssigkeitspumpe 4 verbunden ist. Je nach Stellung dieser Pumpe 4 läuft der Hydromotor 1 mehr oder weniger schnell rückwärts beziehungsweise vorwärts. Das vom Hydromotor zurücklaufende Öl gelangt über die Tankleitung 5 in den Öltank 6. Dieses System stellt den ersten Hydraulikkreislauf mit einem Ölstrom (A) dar. Aus dem Öltank 6 saugt die Flüssigkeitspumpe 20 Öl über die Leitung 16 an, welches einen Filter 7 durchströmt und in der Leitung 8 ansteht. Diese ist über Ventile 9 mit der Regulierungsflüssigkeitspumpe 4 verbunden. Die von dieser Pumpe 4 nicht abgenommene Ölmenge gelangt über die Überströmleitung 10 zur Tankleitung 5 und von dort in den Öltank 6. Ein Druckbegrenzungsventil 11 regelt in bekannter Weise den Öldruck im System.

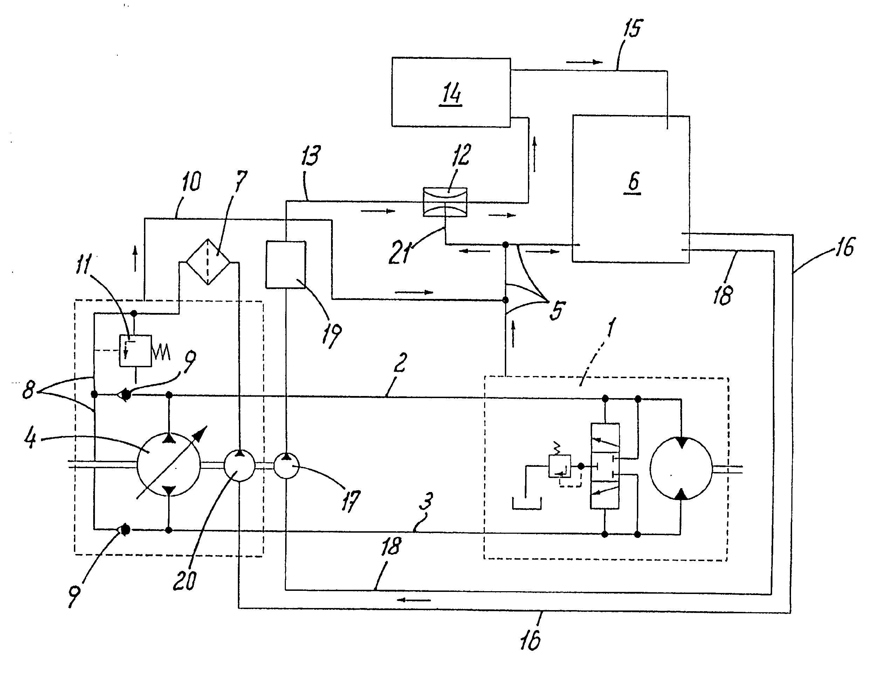

Wie aus der einzigen Figur zu entnehmen, zweigt von der Tankleitung 5 eine Leitung 21 ab, die mit der Saugseite einer Venturidüse 12 verbunden ist. Durch diese Leitung 21 werden die beiden beispielhaft gezeigten Hydraulikkreisläufe miteinander verbunden, und die Menge an zu kühlender Flüssigkeit, die im ersten Hydraulikkreislauf entsteht, wird über die Venturidüse 12 in die Ölleitung 13 des zweiten Hydraulikkreislaufs zum Ölkühler 14 gefördert.

In einem zweiten Hydraulikkreislauf mit einem Ölstrom (B) wird von einer Flüssigkeitspumpe 17 über die Leitung 18 Öl aus dem Öltank 6 gesaugt und gegen ein Steuerventil 19 gefördert. Vom Steuerventil 19 wird das Öl in durch eine Leitung 13 zum Ölkühler 14 gefördert. In die Ölleitung 13 ist eine Venturidüse 12 eingesetzt, in die auch die Leistung 21 mündet. Der Ölkühler 14 ist mittels einer Verbindungsleitung 15 an den Öltank angeschlossen. In die Leitung 13 ist ein Steuerventil 19 beispielsweise für die hydraulische Lenkung eines Mähdreschers eingesetzt, so daß dieses ebenso wie die nachgeschaltete Venturidüse 12 ständig durchströmt wird.

Je nach Temperatur des die Venturidüse 12 durchströmenden Öls und der sich in Abhängigkeit von der Temperatur ändernden Viskosität wird von der Saugseite der Venturidüse 12 ein mehr oder weniger großer Teilstrom des die Tankleitung 5 durchströmenden Gesamtöls abgesaugt und dem Ölkühler zugeführt. Dieser arbeitet dann im optimalen Bereich, weil das System selbstregelnd ist und der Kühler stets von einer idealen Ölmenge durchströmt wird, ohne daß der im gesamten System zulässige Maximaldruck überschritten wird.

### Bezugszeichenliste

- 1: - Hydromotor
- 2: - Leitungen
- 3: - Leitungen
- 4: - Pumpe
- 5: - Tankleitung
- 6: - Öltank
- 7: - Filter
- 8: - Leitung
- 9: - Ventile
- 10: - Überströmleitung
- 11: - Druckbegrenzungsventile
- 12: - Venturidüse
- 13: - Ölleitung
- 14: - Ölkühler
- 15: - Verbindungsleitung
- 16: - Leitung
- 17: - Pumpe
- 18: - Leitung
- 19: - Steuerventil
- 20: - Pumpe

## Patentansprüche

1. Selbstfahrende Arbeitsmaschine mit einem Verbrennungsmotor und mit hydrostatischen Antrieben mit mindestens einer, von dem Verbrennungsmotor angetriebenen Hydraulikpumpe, die die Hydraulikmotoren und/oder Hydraulikzylinder der Antriebe mit aus einem Tank angesaugten Hydrauliköl bedarfsweise speist und die zur Erzeugung eines umlaufenden Ölstromes eingesetzt ist, in den mindestens ein Verbraucher eingeschaltet ist, wobei zwecks Kühlung des im Arbeitskreis vorhandenen Hydrauliköls ein Teilstrom der in den Öltank zurückzuführenden Gesamtölmenge einen Ölkühler durchströmt,
**dadurch gekennzeichnet,**
**dass** ein Ölstrom (B) vor seiner Rückführung in den Öltank (6) einen Ölkühler (14) durchläuft und das in den umlaufenden Ölstrom (B) vor seinem Einlauf in den Öltank (6) eine Einrichtung (12) eingebaut ist, die in Abhängigkeit von der Temperatur des umlaufenden Ölstroms einen Teilstrom aus einem ölstrom (A) **abzweigt und wobei die Einrichtung (12) als Venturidüse (12) ausgeführt ist.**

2. Selbstfahrende, vorzugsweise landwirtschaftliche Arbeitsmaschine nach Anspruch 1,
**dadurch gekennzeichnet,**
**daß** der umlaufende Ölstrom (B) über eine Leitung (13) in den Ölkühler (14) geführt ist, in die eine Venturidüse (12) eingebaut ist, deren Sauganschluß mit der Leitung (5) in Verbindung steht, über die der Ölstrom (A) für die hydrostatischen Antriebe in den Öltank (6) zurückgeführt ist.

## Claims

1. A self-propelled working machine comprising an internal combustion engine and hydrostatic drives with at least one hydraulic pump which is driven by the internal combustion engine and which feeds the hydraulic motors and/or hydraulic cylinders of the drives as required with hydraulic oil sucked from a tank and which is used to produce a circulating oil flow into which at least one consumer is connected, wherein a partial flow of the total amount of oil to be returned to the oil tank flows through an oil cooler for the purposes of cooling the hydraulic oil present in the working circuit,
**characterised in that**
an oil flow (B) passes through an oil cooler (14) before being returned to the oil tank (6) and incorporated into the circulating oil flow (B) before it passes into the oil tank (6) is a device (12) which branches a partial flow out of an oil flow (A) in dependence on the temperature of the circulating oil flow and wherein the device (12) is in the form of a venturi nozzle (12).

2. A self-propelled, preferably agricultural working machine according to claim 1 **characterised in that** the circulating oil flow (B) is passed into the oil cooler (14) by way of a conduit (13) into which a venturi nozzle (12) is fitted, the suction connection of which is connected to the conduit (5), by way of which the oil flow (A) for the hydrostatic drives is returned to the oil tank (6).

## Revendications

1. Machine de travail automotrice comprenant un moteur à combustion et des moyens d'entraînement hydrostatiques avec au moins une pompe hydraulique qui est entraînée par le moteur à combustion, qui, en fonction des besoins, alimente les moteurs hydrauliques et/ou les vérins hydrauliques des moyens d'entraînement avec une huile hydraulique aspirée depuis un réservoir et qui est mise en oeuvre pour générer un flux d'huile en circulation dans lequel est intercalé au moins un organe utilisateur, un flux partiel de la quantité totale d'huile à ramener dans le réservoir d'huile traversant un refroidisseur d'huile en vue de refroidir l'huile hydraulique en circulation dans le circuit de travail, **caractérisée en ce qu'**un flux d'huile (B) traverse un refroidisseur d'huile (14) avant son retour dans le réservoir d'huile (6) et **en ce que** dans le flux d'huile en circulation (B), avant son entrée dans le refroidisseur d'huile (6), est inséré un dispositif (12) qui dérive un flux partiel du flux d'huile (A) en fonction de la température du flux d'huile en circulation, le dispositif (12) étant réalisé sous forme de venturi (12).

2. Machine de travail automotrice, de préférence agricole, selon la revendication 1, **caractérisée en ce que** le flux d'huile en circulation (B) atteint le refroidisseur d'huile (14) par l'intermédiaire d'une conduite (13) sur laquelle est monté un venturi (12) dont le raccord d'aspiration est en communication avec la conduite (5) par laquelle le flux d'huile (A) destiné aux moyens d'entraînement hydrostatiques est ramené dans le réservoir d'huile (6).
